# EUROPÄISCHE PATENTSCHRIFT

(11) **EP 1 877 523 B1**
(45) Veröffentlichungstag und Bekanntmachung des Hinweises auf die Patenterteilung: **11.04.2018**
(21) Anmeldenummer: 06706618.3
(22) Anmeldetag: 01.02.2006
(51) Int. Cl.: C10L 5/36, C10L 5/40, C10L 5/42, C10L 5/44, C10L 5/46

(54) **VERFAHREN ZUR HERSTELLUNG VON BIOMASSEBRENNSTOFF**
PROCESS FOR THE PRODUCTION OF BIOMASS FUEL
PROCÉDÉ DE FABRICATION D'UN COMBUSTIBLE À BASE D'UNE BIOMASSE

(30) Priorität: 01.02.2005 DE 10504634
(43) Veröffentlichungstag der Anmeldung: 16.01.2008
(73) Patentinhaber: Werner, Hans, 81825 München (DE)
(72) Erfinder: Werner, Hans, 81825 München (DE)
(74) Vertreter: Leske, Thomas
(86) Internationale Anmeldenummer: PCT/EP2006/000950
(87) Internationale Veröffentlichungsnummer: WO 2007/087827

(56) Entgegenhaltungen:
- EP-A- 0 247 285
- EP-A- 1 443 096
- EP-A1- 0 347 765
- EP-A2- 0 359 250
- DE-A1- 19 503 669
- DE-A1- 19 536 099
- DE-A1- 19 629 123
- FR-A- 877 170
- GB-A- 2 131 046
- JP-A- H10 130 672
- JP-A- H10 316 982
- JP-A- 2002 281 908
- US-A- 5 429 645
- PATENT ABSTRACTS OF JAPAN Bd. 1998, Nr. 10, 31. August 1998 (1998-08-31) -& JP 10 130672 A (HITACHI LTD), 19. Mai 1998 (1998-05-19)

## Beschreibung

Die vorliegende Erfindung betrifft ein Verfahren und eine Vorrichtung zur Herstellung von Brennstoff aus Biomasse und Verwendungen derselben.

Neben fossilen Brennstoffen finden Energieträger in Form von Biomasse in zunehmendem Maße Verwendung. Unter Biomasse werden insbesondere Pflanzen, Pflanzenbestandteile, biologische Produkte und Nebenprodukte pflanzlicher und tierischer Herkunft und Holz verstanden.

Herkömmlicherweise wird bei Energiegewinnung mittels Biomasse diese einfach verbrannt. Diese Vorgehensweise hat mehrere Nachteile. Abhängig von der Art zu verbrennender Biomasse können sich Transport, Bevorratung und Handhabung vor dem oder beim Verbrennen im Vergleich mit fossilen Brennstoffen deutlich komplexer gestalten. Als anschauliches Beispiel sei hier die Verwendung von Stroh als Brennstoff genannt.

Aufgrund seines hohen Energiegehalts stellt Holz eine bevorzugte Biomasse dar. Um auch Holz in Form von Holzabfällen, Spänen und dergleichen nutzen zu können, ist es zum Beispiel aus US 4,324,561 bekannt, durch Verpressen von Holzpartikeln sogenannte Holzpellets herzustellen und zur Energieerzeugung zu verwenden. Aus US 4,324,561 ist es ferner bekannt, Brennstoffpellets auf der Grundlage von Baumrinde, Stroh und anderen botanischen Materialien herzustellen.

Die Verwendung von auf Getreide basierendem Stroh als Ausgangsmaterial zur Herstellung von Brennstoff, insbesondere auf der Grundlage von Roggen oder Weizen, ist auch aus US 5,352,252 bekannt.

US 4,363,636 beschreibt die Verwendung von Brennstoff auf der Grundlage von Zuckerrohr.

EP 0 985 723 A2 beschreibt die Herstellung von Festbrennstoff auf der Grundlage einer zellulosehaltigen Brennstoffkomponente, insbesondere Holz, holzartiger Stoffe und Späne und einer weiteren, Pferdedung enthaltenden Komponente.

Gemäß DE 101 53 975 A1 wird Brennstoff auf der Grundlage von Biomasse mit hoher spezifischer Dichte und hohem Fett- und/oder Ölanteil hergestellt. Insbesondere ist vorgesehen, Schalen und Kerne von Obst und Nüssen sowie Palmwedel zu verwenden.

CH 248 748 beschreibt die Herstellung von Briketts aus pflanzlichen Stoffen, wie zum Beispiel Abfälle aus der Holzverarbeitung, Torf, Hanfscheben, Stroh, Eberlohe, Kartoffelkraut, Sonnenblumenkernschalen und Maiskolben.

Aus EP 1 443 096 A1 ist bekannt, anstelle von trockenen biologischen Stoffen feuchte Biomasse wie beispielsweise Gras zu verarbeiten und sie vor dem Verpressen zu Pellets zu zerkleinern und zu trocknen.

Weiterhin ist in DT 26 16 725 A 1 bereits vorgeschlagen worden, feuchte Biomasse vor dem Verpressen einer Fermentation (Gärung, Fäulnis) zu unterziehen und die dabei entstehende Wärme zur Trocknung der Masse auszunutzen.

Dabei wird in DT 26 16 725 A und in DE 197 07 848 A1 darauf hingewiesen, dass die Fermentation zu einer verbesserten Stabilität der Presslinge führt.

Aus JP2002 281 908 A ist bekannt, den Bodensatz aus der Sake-Herstellung zur Feuchtereduktion mit entfetteter Reiskleie, Weizenkleie und/oder Glutenzugaben zu mischen. Die Mischung kann dann als Futter, Dünger oder Brennstoff verwendet werden.

Die Menge an auf Biomasse basierenden Brennstoffen gemäß dem Stand der Technik reicht derzeit nicht aus, um den zunehmenden Bedarf zu decken. Ferner sind Biomassebrennstoffe gemäß dem Stand der Technik im Allgemeinen zur Verwendung in industriellen Anlagen vorgesehen. Eine Verwendung von Biomassebrennstoffen in Privathaushalten ist typischerweise nicht vorgesehen. Auf der anderen Seite steht Biomasse, insbesondere in Form von Abfällen, in praktisch unbegrenzter Menge zur Verfügung. Sie wird derzeit allenfalls kompostiert und dann, weil die verfügbaren Mengen den Bedarf übertreffen, vielfach deponiert, so dass ihr Energiegehalt ungenutzt bleibt.

Aufgabe der vorliegenden Erfindung ist es, den zunehmenden Bedarf an Biomassebrennstoffen auf einfache und kostengünstige Weise zu decken und Biomassebrennstoffe zugleich in größerem Umfang für private Haushalte nutzbar zu machen.

Zur Lösung dieser Aufgabe stellt die Erfindung ein Verfahren zur Herstellung von Brennstoff aus in Form gepressten Biomassen bereit, bei dem als Biomassen kompostierbare Biomasse aus aus Nass- und/oder Trockenvergärung resultierenden ausgegorenen Gärprodukten und/oder Silageprodukte und andere feuchte und/oder trockene biologische Abfälle in Form gepresst werden, wobei Biomasse mit hohem Feuchtegehalt vor einem Trocknen vor dem Formpressvorgang einem Pressvorgang zum Reduzieren des Feuchtegehalts unterworfen wird.

Die Formulierungen "in Form gepresst" sowie "Formpressen" und ähnliche werden im Folgenden verwendet, um anzugeben, dass die Biomasse gepresst, verpresst, verdichtet und dergleichen wird. Auf diese Weise können Brennstoffe in stückiger, handhabbarer Form erzeugt werden. Beispiele sind Biomassebrennstoffe in Form von Granulat, Presslingen, Pellets, Briketts, und Pressformen größerer Abmessung. Die Form erfindungsgemäßer Brennstoffe hängt beispielsweise davon ab, auf welche Weise bzw. mit welchen Vorrichtungen diese verbrannt werden sollen. So bieten sich für eine Verwendung zum Heizen in Privathaushalten erfindungsgemäße Brennstoffe in Form von Presslingen, Pellets oder Briketts an. Bei Verwendung erfindungsgemäßer Brennstoffe in größeren Energieerzeugungsanlagen, wie zum Beispiel Biomassekraftwerken, können Pressformen größeren Volumens verwendet werden. Die Verwendung erfindungsgemäßer Brennstoffe in Form von Granulat erlaubt die Verbrennung in kleinen Vorrichtungen, beispielsweise Taschenwärmern, Campingkochern.

Bei Nass- und Trockenvergärung von Biomasse entstehen brennbare Gase, die zur Energieerzeugung verwendet werden können. Nach dem Vergären, d.h. wenn die Biomasse ausgegoren ist, bleibt Biomasse zurück, die bisher kompostiert wurde. Diese kompostierbare Biomasse und/oder kompostierbare Biomasse, die keinem vorherigen Vergärprozess unterworfen wurde, ist zur Verwendung bei der vorliegenden Erfindung vorgesehen. Bisher wurde kompostierbare Biomasse, wenn sie nicht entsorgt wurde, kompostiert. Dies hat zu Kompostmengen geführt, die im Allgemeinen nur subventioniert, mit Verlust beispielsweise an landwirtschaftliche Betriebe weitergegeben werden konnten. Eine dieses Problem lösende Verwendung von kompostierbarerer Biomasse als Ausgangsmaterial zur Brennstoffherstellung ist bisher nicht in Erwägung gezogen worden. Im Gegensatz dazu ist solche Biomasse bei der vorliegenden Erfindung zur Brennstoffherstellung vorgesehen, was nicht nur eine Abkehr von der üblichen Vorgehensweise darstellt. Vielmehr eröffnet die vorliegende Erfindung neue Möglichkeiten, Biomasse, die als Nebenprodukt oder Überschuss anfallend zur Vergärung bzw. Kompostierung verwendet wurde, und zur Kompostierung bzw. Vergärung gezielt angebaute Biomasse zu nutzen. Insbesondere werden durch die vorliegende Erfindung einem gezielten Anbau solcher Biomasse neue Perspektiven eröffnet. Dies gilt auch für bei der vorliegenden Erfindung vorgesehene Silageprodukte.

In Betracht kommt auch die Verwendung, insbesondere in Form einer Beimischung, von Klärschlämmen u. ä., die in großer Menge anfallen und sonst nur deponiert werden können.

Auch bei den meisten anderen erfindungsgemäß vorgesehenen Abfallarten ist eine Verwendung zur Brennstoffherstellung bisher entweder unbekannt oder, soweit sie schon zur Energieerzeugung verwendet wurden, ist jedenfalls eine Verwendung zur Brennstoffherstellung im Sinn der vorliegenden Erfindung, insbesondere in Form von verbrennbaren Presslingen, nicht bekannt. Diese Abfallarten sind bisher allenfalls zerkleinert, aber im Wesentlichen unverarbeitet verbrannt worden.

Nach der Erfindung soll bevorzugt als Biomasse sogenannter Biomüll oder Bioabfall verwendet werden, wie er beispielsweise in privaten Haushalten aber auch in gewerblichen Betrieben wie Gaststätten oder Verkaufsstellen anfällt und in der sogenannten "Braunen Tonne" gesammelt wird. Beispiele hierfür sind Obst, Obstreste, Obstschalen, Obstkerne, Gemüse, Gemüsereste, Salat, Salatreste, Blumen, Blumenreste, Pflanzen, Pflanzenreste, Kaffee, Kaffeereste, Tee bzw. Teeblätter sowie Reste derselben, etc.

Bei dem erfindungsgemäßen Verfahren wird die Biomasse, soweit erforderlich, mittels eines technischen Verfahrens getrocknet, bevor sie in Form gepresst wird.

Die Biomasse vor dem Formpressen zu trocknen erlaubt, beliebige Biomasse unabhängig von ihrem Feuchtegehalt zu verwenden, insbesondere auch solche Biomasse, die wegen ihres zu hohen Feuchtegehalts bisher unberücksichtigt blieb. Die Vorgehensweise, Biomasse sowohl zu trocknen als auch zu pressen, führt zu Brennstoffen mit gegenüber herkömmlichen Ansätzen erhöhten Brennwerten bzw. Energiegehalten pro Masse und/oder Volumen sowie verringertem Transportvolumen.

Um den Trocknungsprozess zu vereinfachen und/oder um Brennstoffe in beliebiger Form herzustellen, ist es bevorzugt, die Biomasse vor dem Trocknen zu zerkleinern. Dies kann beispielsweise durch Häckseln, Schreddern und dergleichen erfolgen.

Insbesondere bei Biomasse mit hohem Feuchtegehalt ist es erfindungsgemäß, diese vor dem Trocknen zu pressen, um dadurch den durch das Trocknen zu entfernenden Feuchtegehalt zu reduzieren. Um das Pressen zu erleichtern und/oder zu verbessern, kann die Biomasse zuvor zerkleinert werden. Die durch Pressen teilentwässerte Biomasse kann so beschaffen sein, dass der eigentliche Trocknungsvorgang erschwert wird. Sie kann beispielsweise verdichtet oder verklumpt sein. Für diesen Fall ist vorgesehen, die Biomasse nach dem Pressvorgang erneut zu zerkleinern, um das weitere Trocknen zu erleichtern.

Zum Trocknen der Biomasse kann Kondensationstrocknung bei Umgebungstemperatur oder bei einer gegenüber Umgebungstemperatur erhöhten Temperatur (z.B. Warmluftzufuhr, erwärmtes sonstiges Gas) verwendet werden. Die Trocknung kann auch nur durch erwärmte Gase, beispielweise in Form von Heißluft, erwärmte technische Gase und Kombinationen derselben erreicht werden. Insbesondere ist es bevorzugt, zum Trocknen bei anderen Verfahren oder Vorrichtungen entstehende Abwärme zu nutzen, die beispielsweise bei der Kompostierung oder Vergärung von Biomasse, bei Siliervorgängen, bei Heizkraftwerken oder in Räumen oder Gebäuden in Privathaushalten oder im industriellen Bereich entsteht. Hierbei können z.B. Wärmepumpen verwendet werden, um Abwärme dem Trocknungsvorgang zuzuführen. Wie unten ausgeführt ist es auch möglich, zum Trocknen benötigte Energie wenigstens teilweise durch Verbrennen erfindungsgemäß hergestellter Brennstoffe zu erzeugen. Alternativ oder ergänzend ist es vorgesehen, zum Trocknen eine Mikrowellenheizung zu verwenden.

Die beim Trocknen verwendeten Temperaturen der Umgebung der Biomasse bzw. die beim Trocknen in der Biomasse erzeugten Temperaturen hängen von der Art der Biomasse, der gewünschten oder vorgegebenen Trocknungsdauer, einem gewünschten oder beispielsweise gesetzlich vorgegebenen Wirkungsgrad beim Trocknen ab.

Bei der Trocknung können auch in der zu verarbeitenden Biomasse enthaltene Stoffe entfernt werden, die deren Verarbeitung erschweren und/oder die Verbrennung des Biomassebrennstoffs nachteilig beeinflussen. So können beispielsweise Geruchsbelastungen, gesundheitsschädliche oder gesundheitsbedenkliche Emissionen, Rauchentwicklung und dergleichen beim Verbrennen erfindungsgemäß hergestellten Brennstoffs vermieden werden.

Um beim Verbrennen erfindungsgemäß hergestellten Brennstoffs entstehende Emissionen zu verringern, ist es beispielsweise vorgesehen, beim Trocknen der Biomasse entstehende Gase oder anfallende Flüssigkeiten abzusaugen und beispielsweise durch geeignete Abgas- bzw. Filtervorrichtungen zu führen und gegebenenfalls als Sondermüll zu entsorgen. Derartige Verfahrensschritte können alternativ oder ergänzend auch bei jedem anderen Schritt des erfindungsgemäßen Verfahrens durchgeführt werden.

Gemäß einer bevorzugten Ausführungsform wird die Biomasse beim Trocknen unter Druck gesetzt und, beispielweise nach einer vorgegebenen oder gewünschten Trocknungsdauer, noch im erwärmten Zustand Umgebungsdruck ausgesetzt. Die dabei auftretende Druckänderung bewirkt, dass zusätzlich Feuchtigkeit aus der Biomasse austritt.

Weil die Biomasse vor dem Formpressen getrocknet wird, ist es möglich, unterschiedliche Arten von Biomasse in vermengter Form zu verarbeiten, ohne dabei auf den Feuchtegehalt einzelner Arten von Biomasse zu achten. Werden unterschiedliche Arten in vermengter Form verwendet, ist/sind wenigstens der Trocknungsvorgang und vorzugsweise, falls gegeben, auch der bzw. die Zerkleinerungsvorgänge und/oder der Pressvorgang entsprechend auszulegen. Dies kann zwar die einzelnen Verfahrensschritte verlängern und komplexer gestalten, erlaubt es aber, beliebige Biomasse ohne vorherige Trennung in einzelne Arten zu verwenden.

Wenn verschiedene Arten von Biomasse getrennt vorliegen, können die einzelnen Verfahrensschritte für jede Art getrennt durchgeführt werden. Dies erlaubt es, die einzelnen Verfahrensschritte auf die jeweilige Art Biomasse besser abzustimmen und Brennstoff herzustellen, der nur auf einer Art Biomasse basiert.

Wenn für unterschiedliche Arten von Biomasse die einzelnen Verfahrensschritte, abgesehen vom Formpressen, durchgeführt sind, können die unterschiedlichen Arten vermengt und gemeinsam in Form verpresst werden. Auf diese Weise können Brennstoffe hergestellt werden, die auf unterschiedlichen Arten von Biomasse basieren und Biomasse in unterschiedlicher Zusammensetzung und/oder unterschiedlichen Anteilen enthalten. Eine solche Kombination unterschiedlicher Arten von Biomasse erlaubt beispielsweise, neben Biomasse hohen Heizwerts zur Herstellung eines Brennstoffs auch Biomasse niedrigen Heizwerts zu verwenden, die wegen dieses niedrigen Heizwerts alleine nicht zur Brennstoffherstellung gewählt würde. Auch können unterschiedliche Arten Biomasse zur Herstellung eines Brennstoffs so kombiniert werden, dass sich Emissionen der unterschiedlichen Biomassearten beim Verbrennen kompensieren oder so miteinander reagieren, dass unerwünschte Emissionen, die bei getrennter Verbrennung entstünden, vermieden werden.

Die erfindungsgemäß vorgesehenen Abfallarten sind bisher nicht als zur Herstellung von Brennstoff geeignet angesehen worden. Dies ist unter anderem auf ihren Feuchtegehalt und darauf zurückzuführen, dass sie zum Teil zur Kompostierung geeignet sind. Eine Verwendung dieser Biomassen gemäß der vorliegenden Erfindung stellt eine grundsätzliche Abkehr von ihrer bisherigen Betrachtung und Verwendung dar.

Zur Erzeugung der für die Durchführung des erfindungsgemäßen Verfahrens nötigen Energie, insbesondere der für die Trocknung nötigen Wärme, können außer herkömmlichen fossilen Brennstoffen Windenergie oder Sonnenenergie sowie auch nach dem erfindungsgemäßen Verfahren hergestellte Brennstoffe verwendet werden. Ferner ist es möglich, durch Verbrennung erfindungsgemäß hergestellter Brennstoffe elektrische Energie zu erzeugen und diese bei der Verfahrensdurchführung zu verwenden.

Bei einem weiteren erfindungsgemäßen Verfahren ist es vorgesehen, Brennstoffe, die gemäß einem der oben beschriebenen Verfahren hergestellt sind, zur Erzeugung von thermischer Energie, insbesondere Energie in Form von Wärme und/oder Strom durch Verbrennung in einer Feuerungsanlage, einem Ofen, einer Heizungsanlage und dergleichen zu verwenden.

Ferner wird eine nicht erfindungsgemäße Vorrichtung zur Herstellung von Brennstoffen aus gepresster Biomasse gemäß dem erfindungsgemäßen Verfahren mit einer Einrichtung zum Formpressen von Biomasse bereitgestellt, die ausgelegt ist, um trockene Biomasse, oder auch Mischungen verschiedener Arten von Biomasse, insbesondere solche aus nassen und trockenen Biomassearten, vor allem auch in Form von Gärungsprodukten und/oder Silageprodukten und/oder wenigstens einer der oben genannten Abfallarten in Form zu pressen.
Vorzugsweise umfasst die Vorrichtung, soweit sie nur trockene Biomasse verarbeitet, eine Einrichtung zum Zerkleinern der Biomasse vor dem Formpressen.

Soweit auch feuchte Biomasse verarbeitet wird, umfasst die Vorrichtung weiter eine Einrichtung zum Trocknen, die der Formpresseinrichtung vorgeschaltet und zum Trocknen von feuchter Biomasse, auch in Form von Gärungsprodukten und/oder Silageprodukten ausgelegt ist.

Auch in diesem Falle umfasst die Vorrichtung weiter eine Einrichtung zum Zerkleinern der Biomasse vor dem Trocknen und/oder vorzugsweise darüber hinaus eine Einrichtung zum Pressen der Biomasse, bevor sie der Trocknungseinrichtung zugeführt werden. Dabei ist es vorgesehen, dass die Zerkleinerungseinrichtung der Presseinrichtung vorgeschaltet ist oder umgekehrt oder dass eine Zerkleinerungseinrichtung sowohl vor als auch nach der Presseinrichtung verwendet wird.

Bei einer bevorzugten Ausführungsform der Vorrichtung umfasst die Trocknungseinrichtung eine Trockenkammer zur Aufnahme der, gegebenenfalls zerkleinerten und/oder gepressten, Biomasse, die mittels eines erwärmten Gases und/oder mittels einer Mikrowellenheizung so erwärmt wird, dass die Biomasse nach Beendigung des Trocknungsvorgangs einen gewünschten oder vorgegebenen Feuchtegehalt aufweist.

Um beispielweise zu verhindern, dass beim Trocknen entstehende Gase und/oder Fluide austreten können, ist vorgesehen, die Trocknungseinrichtung während des Trocknens gas- und/oder fluiddicht zu verschließen. Auf diese Weise können gesammelte Gase und/oder Fluide abgesaugt, abgeführt und, falls erforderlich, entsorgt werden. Wenn beim Trocknen der Biomasse Gase entstehen, erlaubt es diese Ausführungsform der Trocknungseinrichtung, dabei entstehenden Gasdruck zu verwenden, um die Biomasse beim Trocknen, wie oben beschrieben, unter Druck zu setzen.

Mittels einer Einrichtung, um den beim Trocknen auf die Biomasse wirkenden Druck zu steuern, kann der Trocknungsvorgang verbessert werden, wenn beispielsweise nach einer vorgegebenen Zeitdauer die noch erwärmte Biomasse einem Druckabfall ausgesetzt wird.

Insbesondere wenn Biomasse in getrennter Form vorliegt und getrocknet wird, umfasst die Vorrichtung vorzugsweise eine Einrichtung, um die unterschiedlichen Arten getrockneter Biomasse zu vermengen, bevor sie in Form gepresst werden. Alternativ dazu ist vorgesehen, dass die Vorrichtung eine Einrichtung aufweist, um die Biomasse vor dem Trocknen, gegebenenfalls auch vor dem Zerkleinern und/oder Pressen, zu vermengen. Letzteres hat den Vorteil, dass in getrennter Form bereitgestellte Arten Biomasse gemeinsam verarbeitet werden können.

Um beispielsweise die Vorrichtung selbst wenigstens teilweise mit Energie zu versorgen, kann diese eine Einrichtung zur Erzeugung von Energie durch Verbrennung mittels der Vorrichtung hergestellter Brennstoffe aufweisen. Die Energieerzeugungseinrichtung kann beispielsweise eine der Trocknungseinrichtung thermische Energie bereitstellende Einrichtung (z.B. Ofen) und/oder eine der Vorrichtung elektrische Energie zuführende Einrichtung sein.

### Kurzbeschreibung der Figuren

Bei der Beschreibung bevorzugter Ausführungsformen der vorliegenden Erfindung wird auf die beigefügte Figur Bezug genommen, die zeigt:

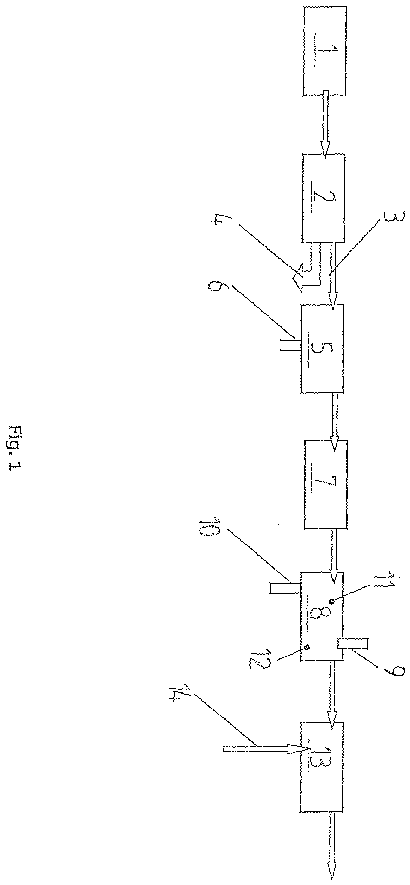

Fig. 1 eine schematische Darstellung einer bevorzugten Ausführungsform eine nicht erfindungsgemäße Vorrichtung zur Herstellung von Brennstoffen aus gepresster Biomasse gemäß dem erfindungsgemäßen Verfahren sowie deren Betrieb.

### Beschreibung bevorzugter Ausführungsformen

Bezugnehmend auf Fig. 1 wird eine Ausführungsform der Vorrichtung zur Herstellung von Brennstoffen aus gepresster Biomasse in Form brennbarer Pellets sowie deren Betrieb beschrieben, wobei der Veranschaulichung halber auf Biomasse in Form von sogenanntem Biomüll oder Bioabfall, z.B. von Privathaushalten und Restaurationsbetrieben, Bezug genommen wird.

Biomasse wird in einer Sammeleinrichtung 1, beispielsweise einem Container, gesammelt. Die in der Sammeleinrichtung 1 aufgenommene Biomasse kann unterschiedlicher Art und/oder Herkunft sein und in vermengter Form vorliegen. Der Einfachheit halber wird im Folgenden angenommen, dass in der Sammeleinrichtung 1 eine Art Biomasse, nämlich Biomüll, aufgenommen ist.

Der Biomüll wird von der Sammeleinrichtung 1 zu einer Zerkleinerungseinrichtung 2 befördert, die beispielsweise ein Schredder, Häcksler etc. sein kann. Um möglicherweise in dem Biomüll enthaltene Verunreinigungen zu entfernen, ist vorgesehen, dass die Zerkleinerungseinrichtung 2 baueinheitlich integriert oder nachgeschaltet eine in dieser Figur nicht bezeichnete Einrichtung aufweist, um zerkleinerten Biomüll und Verunreinigungen getrennt weiter zu befördern. Dies ist in Fig. 1 durch den die Beförderung zerkleinerten Biomülls angebenden Pfeil 3 und durch den die Entfernung von Verunreinigungen angebenden Pfeil 4 angedeutet.

Der zerkleinerte Biomüll wird von der Zerkleinerungseinrichtung 2 zu einer Presseinrichtung 5 befördert, um dem Biomüll durch Pressen Wasser zu entziehen. Dabei anfallendes Wasser oder andere Fluide werden über einen Ablass 6 entfernt.

Falls der Biomüll nach dem Pressen in der Presseinrichtung 5 eine Beschaffenheit aufweist, die dessen Trocknung erschweren und insbesondere die Trockendauer verlängern und/oder einen höheren Energieaufwand beim Trocknen erfordern kann, wird der Biomüll nach Verlassen der Presseinrichtung 5 einer weiteren Zerkleinerungseinrichtung 7 zugeführt.

Der so vorgetrocknete Biomüll wird von der Einrichtung 7 zu einer Trocknungseinrichtung 8 befördert, wo er mittels eines oder mehrerer erwärmter Gase (z.B. Heißluft), mittels einer Mikrowellenheizung, mittels einer elektrischen Heizung und/oder dergleichen erwärmt wird. Beim Trocknen entstehende Dämpfe, insbesondere Wasserdampf, anfallendes Wasser oder anfallende Feuchtigkeit können über einen Abgaskanal 9 bzw. einen Fluidablasskanal 10 entfernt werden. Mittels eines Temperatursensors 11 kann die Temperatur des zu trocknenden Biomülls und/oder der in der Trocknungseinrichtung 5 vorhandenen Umgebung gemessen werden, um beispielsweise eine unerwünschte Entzündung des Biomülls zu verhindern und den Trocknungsvorgang zu steuern. Um zu überprüfen, ob der in der Trocknungseinrichtung 8 zu trocknende Biomüll einen gewünschten oder geforderten Feuchtegehalt aufweist, wird eine Feuchtigkeitsmesseinrichtung 12 verwendet.

In der Trocknungseinrichtung 8 kann der Biomüll unter einem gegenüber dem Umgebungsdruck erhöhten Druck erwärmt werden. Wird gegen oder am Ende des Trocknungsvorgangs der Druck auf Umgebungsdruck reduziert, tritt aufgrund des Druckunterschieds zwischen dem erwärmten Biomüll und dessen Umgebung Wasser, falls noch vorhanden, aus dem Biomüll aus.

Nach dem Trocknungsvorgang wird der getrocknete Biomüll von der Trocknungseinrichtung 8 in eine Formpresseinrichtung 13, beispielsweise eine Pelletiereinrichtung befördert und zu Presslingen, beispielsweise zu Pellets geformt.

Bei der erfindungsgemäßen Herstellung von Presslingen aus Biomüll und anderen, kompostierbaren Biomassen aus aus Nass- und/oder Trockenvergärung resultierenden ausgegorenen Gärprodukten und/oder Silageprodukten können die anderen Biomassen bis zum Abschluss des Trocknungsvorgangs separat bearbeitet werden. Dies kann nacheinander unter Verwendung der Einrichtungen 1, 2, 5, 7 und 8 oder im Wesentlichen zeitgleich, parallel in diesen entsprechenden zusätzlichen Einrichtungen durchgeführt werden. Der letztere Fall ist in Fig.1 durch den mit 14 bezeichneten Pfeil angedeutet, der die Zufuhr einer anderen getrockneten, optional zerkleinerten und/oder gepressten, Art Biomasse veranschaulicht. Diese wird mit dem von der Trocknungseinrichtung 8 erhaltenen Biomüll in einer nicht dargestellten Einrichtung vermengt und der Pelletiereinrichtung 13 zugeführt, um Pellets herzustellen, die erfindungsgemäß auf unterschiedlichen Arten von Biomasse basieren.

### Bezugszeichen:

- 1: Sammeleinrichtung
- 2: Zerkleinerungseinrichtung
- 3: Beförderungseinrichtung
- 4: Einrichtung zum Wegfördern von Verunreinigungen
- 5: Presseinrichtung
- 6: Fluid-Ablass
- 7: Weitere Zerkleinerungseinrichtung
- 8: Trocknungseinrichtung
- 9: Abgaskanal
- 10: Fluid-Ablass
- 11: Temperatursensor
- 12: Feuchtigkeitsmesseinrichtung
- 13: Formpresseinrichtung/Pelletiereinrichtung
- 14: Zufuhr für andere Biomassen

## Patentansprüche

1. Verfahren zur Herstellung von Brennstoff aus in Form gepresster Biomasse, bei dem als Biomasse
kompostierbare Biomasse aus aus Nass- und/oder Trockenvergärung resultierenden ausgegorenen Gärprodukten und/oder Silageprodukte
und andere feuchte und/oder trockene biologische Abfälle in Form gepresst werden, wobei Biomasse mit hohem Feuchtegehalt vor einem Trocknen vor dem Formpressvorgang einem Pressvorgang zum Reduzieren des Feuchtegehalts unterworfen wird.

2. Verfahren nach Anspruch 1, bei dem als trockene biologische Abfälle Abfälle aus Papier, Pappe und textilen Naturfasern sowie Holz
alternativ oder gemeinsam in Form gepresst werden.

3. Verfahren nach einem der vorherigen Ansprüche, bei dem als andere feuchte biologische Abfälle
Abfälle aus pflanzlichem Gewebe einschließlich
Garten- und Park- und Friedhofsabfälle, einschließlich Laub, Zweigen, Wurzel und anderer Pflanzenbestandteile,
Abfälle aus der Zubereitung und Verarbeitung pflanzlicher Gewebe zu Nahrung oder Tierfutter einschließlich Abfällen aus der Konservenherstellung,
Abfällen aus der Zubereitung und Verarbeitung von Obst, Gemüse, Getreide, Speiseöl, Kakao, Kaffee, Tee, Tabak, Hefe und Hefeextrakt, Melasse,
häuslichen und gewerblichen Küchenabfällen,
verdorbenem Stroh,
Abfälle aus tierischem Gewebe, einschließlich
Abfälle aus der Zubereitung und Verarbeitung von Fleisch, Fisch und anderen Nahrungsmitteln tierischen Ursprungs, einschließlich Abfällen aus der Konservenherstellung, tierische Ausscheidungen einschließlich Stallmist und Gülle/Jauche, Klärschlämme,
biologischer Straßenkehricht und biologische Abfälle aus der Kanalreinigung,
andere organische Stoffe aus Naturstoffen einschließlich Fetten und Wachsen, einschließlich Speiseölen und -fetten,
alternativ oder gemeinsam in Form gepresst werden.

4. Verfahren nach einem der vorherigen Ansprüche, bei dem die Biomasse vor dem Formpressvorgang einem ersten Zerkleinerungsvorgang unterworfen wird.

5. Verfahren nach Anspruch 4, bei dem die Biomasse nach dem ersten Zerkleinerungsvorgang einem Pressvorgang unterworfen wird.

6. Verfahren nach Anspruch 5, bei dem die Biomasse nach dem Pressvorgang einem zweiten Zerkleinerungsvorgang unterworfen wird.

7. Verfahren nach einem der vorherigen Ansprüche, bei dem die Biomasse mittels eines erwärmten Gases getrocknet wird.

8. Verfahren nach einem der vorherigen Ansprüche, bei dem die Biomasse mittels einer Mikrowellenheizung getrocknet wird.

9. Verfahren nach einem der vorherigen Ansprüche, bei dem die Biomasse zum Trocknen unter Druck erwärmt und danach im erwärmten Zustand Umgebungsdruck ausgesetzt wird.

10. Verfahren nach einem der vorherigen Ansprüche, bei dem Biomasse unterschiedlicher Art und/oder Herkunft in Form gepresst wird, die in vermengter Form vorliegt.

11. Verfahren nach einem der vorherigen Ansprüche, bei dem in getrennter Form vorliegende Biomasse unterschiedlicher Art und/oder Herkunft getrennt getrocknet und erst zum Formpressen vermengt wird.

12. Verfahren nach einem der vorherigen Ansprüche, bei dem beim Formpressen der Biomasse Granulat, Presslinge, Pellets oder Briketts hergestellt werden.

13. Verfahren nach einem der vorherigen Ansprüche, bei dem zu dessen Durchführung erforderliche Energie wenigstens teilweise durch Verbrennen gemäß dem Verfahren hergestellten Brennstoffs erzeugt wird.

14. Verfahren zur Erzeugung von thermischer Energie umfassend ein Verfahren zur Herstellung von Brennstoff aus in Form gepresster Biomasse nach einem der vorherigen Ansprüche und eine Verbrennung des hergestellten Brennstoffs.

## Claims

1. Method for producing fuel from biomass that is pressed into shape, in which, as biomass,
compostable biomass from fully fermented fermentation products resulting from wet and/or dry fermentation and/or silage products
and other moist and/or dry biological wastes are pressed into shape,
wherein biomass having a high moisture content is subjected to a pressing process to reduce the moisture content before a drying step before the shape-pressing process.

2. Method according to Claim 1, in which, as dry biological wastes,
wastes from paper, cardboard and natural textile fibres as well as wood are alternatively or jointly pressed into shape.

3. Method according to either of the preceding claims, in which, as other moist biological wastes,
wastes from plant tissue including
garden and park and cemetery wastes, including foliage, twigs, root and other plant constituents,
wastes from the preparation and processing of plant tissue to give food or animal feed including wastes from the production of canned food,
wastes from the preparation and processing of fruit, vegetables, cereals, edible oil, cocoa, coffee, tea, tobacco, yeast and yeast extract, molasses, domestic and industrial kitchen wastes,
spoiled straw,
wastes from animal tissue, including
wastes from the preparation and processing of meat, fish and other foodstuffs of animal origin, including wastes from the production of canned food,
animal excreta including stable manure and semi-liquid manure/liquid manure,
sludges,
biological street-sweepings and biological wastes from drain cleaning,
other organic matter composed of natural products including fats and waxes, including edible oils and edible fats,
are alternatively or jointly pressed into shape.

4. Method according to any of the preceding claims, in which the biomass is subjected to a first comminution process before the shape-pressing process.

5. Method according to Claim 4, in which the biomass is subjected to a pressing process after the first comminution process.

6. Method according to Claim 5, in which the biomass is subjected to a second comminution process after the pressing process.

7. Method according to any of the preceding claims, in which the biomass is dried by means of a warmed gas.

8. Method according to any of the preceding claims, in which the biomass is dried by means of a microwave heater.

9. Method according to any of the preceding claims, in which the biomass is dried by heating it under pressure and exposing it afterwards in the heated state to ambient pressure.

10. Method according to any of the preceding claims, in which biomass of differing type and/or origin is pressed into shape, which biomass is present in mixed form.

11. Method according to any of the preceding claims, in which biomass of differing type and/or origin that is present in separate form is dried separately and is not mixed until shape-pressing.

12. Method according to any of the preceding claims, in which granules, pressed pieces, pellets or briquettes are produced in the shape-pressing of the biomass.

13. Method according to any of the preceding claims, in which energy required to carry it out is generated at least in part by burning fuel produced according to the method.

14. Method for generating thermal energy, comprising a method for producing fuel from biomass that is pressed into shape, according to any of the preceding claims, and a burning of the fuel produced.

## Revendications

1. Procédé pour la production de combustible à partir d'une biomasse façonnée par compression, dans lequel on façonne par compression, en tant que biomasse, une biomasse compostable constituée par des produits de fermentation fermentés provenant de la fermentation humide et/ou sèche et/ou des produits d'ensilage
et d'autres déchets biologiques humides et/ou secs, la biomasse présentant une teneur élevée en humidité étant soumise à un processus de pressage pour la réduction de la teneur en humidité avant un séchage avant le processus de façonnage par compression.

2. Procédé selon la revendication 1, dans lequel on façonne par compression, en alternance ou ensemble, en tant que déchets biologiques secs des déchets de papier, de carton-pâte et de fibres naturelles textiles ainsi que de bois.

3. Procédé selon l'une quelconque des revendications précédentes, dans lequel on façonne par compression, en alternance ou ensemble, en tant d'autres déchets biologiques humides,
des déchets provenant de tissus végétaux, y compris
les déchets de jardins et de parcs et de cimetières, y compris les feuilles, les branches, les racines et d'autres constituants végétaux,
les déchets provenant de la préparation et de la transformation de tissus végétaux pour l'alimentation ou l'alimentation pour animaux, y compris les déchets provenant de la préparation de conserves,
les déchets provenant de la préparation et de la transformation de fruits, de légumes, de céréales, d'huile alimentaire, de cacao, de café, de thé, de tabac, de levure et d'extrait de levure, de mélasse,
les déchets de cuisine domestiques et industriels,
la paille pourrie,
des déchets provenant de tissus animaux, y compris
les déchets provenant de la préparation et de la transformation de viande, de poisson et d'autres aliments d'origine animale, y compris les déchets provenant de la préparation de conserves,
les excréments animaux, y compris le fumier et le purin/lisier,
les boues d'épuration,
les déchets biologiques du balayage des rues et du nettoyage des égouts, d'autres substances organiques provenant de substances naturelles, y compris les graisses et les cires, y compris les huiles et les graisses alimentaires.

4. Procédé selon l'une quelconque des revendications précédentes, dans lequel la biomasse est soumise à un premier processus de broyage avant le processus de façonnage par compression.

5. Procédé selon la revendication 4, dans lequel la biomasse est soumise à un processus de pressage avant le premier processus de broyage.

6. Procédé selon la revendication 5, dans lequel la biomasse est soumise à un deuxième processus de broyage après le processus de pressage.

7. Procédé selon l'une quelconque des revendications précédentes, dans lequel la biomasse est séchée au moyen d'un gaz chauffé.

8. Procédé selon l'une quelconque des revendications précédentes, dans lequel la biomasse est séchée au moyen d'un chauffage par micro-ondes.

9. Procédé selon l'une quelconque des revendications précédentes, dans lequel la biomasse est chauffée sous pression pour le séchage et ensuite soumise, à l'état réchauffé, à la pression ambiante.

10. Procédé selon l'une quelconque des revendications précédentes, dans lequel la biomasse de nature et/ou d'origine différente(s) est façonnée par compression sous une forme mélangée.

11. Procédé selon l'une quelconque des revendications précédentes, dans lequel la biomasse de nature et/ou d'origine différente(s) se trouvant sous forme séparée est séchée séparément et seulement mélangée pour le façonnage par compression.

12. Procédé selon l'une quelconque des revendications précédentes, dans lequel un granulat, des pièces pressées, des pellets ou des briquettes sont fabriqués lors du façonnage par compression.

13. Procédé selon l'une quelconque des revendications précédentes, dans lequel l'énergie nécessaire pour sa réalisation est produite au moins partiellement par combustion de combustible préparé selon le procédé.

14. Procédé pour la production d'énergie thermique comprenant un procédé pour la production de combustible à partir d'une biomasse façonnée par compression selon l'une quelconque des revendications précédentes et une combustion du combustible produit.
